# EUROPEAN PATENT APPLICATION

(11) **EP 2 128 864 A1**
(43) Date of publication of application: **02.12.2009**
(21) Application number: 09305433.6
(22) Date of filing: 14.05.2009
(51) Int. Cl.: G11B 7/09, G11B 7/22

(54) **Actuator for accessing moving storage media, board used for and method for manufacturing the actuator**

(30) Priority: 30.05.2008 EP 08157260
(71) Applicant: THOMSON Licensing, 92100 Boulogne-Billancourt (FR)
(72) Inventor: Kernbach, Joachim, 78052, Villingen-Schwenningen (DE); Moessner, Juergen, 78086, Brigachtal (DE)
(74) Representative: Thies, Stephan

(57) **Abstract**

An actuator for accessing moving storage media (D) carrying substantially parallel information tracks (T) has a suspension wire holder (2), a lens holder (A) with a lens (3), and suspension wires (4) connecting the suspension wire holder (2) and the lens holder (A). According to the invention the suspension wire holder (2) and the lens holder (A) are constituted by a suspension wire holder part (2') and a lens holder part (A') of a single actuator blank (B) made from insulating material, and are arranged coplanarly relative to each other the same way as they were while still connected to the actuator blank (B).

## Description

### TECHNICAL FIELD

The present invention is related to an actuator in a pickup for accessing moving storage media according to the preamble of claim 1, to a board used for manufacturing the actuator, and to a method for manufacturing the actuator. A pickup with an actuator is used as a part of a recording and/or reproducing apparatus, e. g. of a DVD player, a DVD recorder or of similar apparatuses.

### BACKGROUND ART

A pickup with an actuator for accessing moving storage media records and/or reproduces information with respect to the moving storage media carrying substantially parallel information tracks, namely a turning disk, while moving in the radial direction of the disk. In the pickup, typically one or more light beams are generated and focused onto a target or scanning spot on a layer within the disk. Readout light beams coming from the disk are projected onto a photo detector, where they are converted into electrical signals for further evaluation.

A known design for actuators comprises a base carrying a suspension wire holder, a lens holder with a lens, and suspension wires connecting the suspension wire holder and the lens holder. The suspension wires serve a double purpose: mechanically they movably support the lens holder, and electrically they allow to apply currents to coils on the movable lens holder. The coils on the lens holder, interacting with a magnet configuration on the base, initiate the movements of the lens holder. Information tracks on the moving storage medium are in the form of concentric circles or in spiral form. In both cases, at least locally in the vicinity of the target, the information tracks can be considered as straight and substantially parallel. The lens holder, guided by the suspension wires acting as a parallelogram suspension, is movable relative to the suspension wire holder in at least a focus direction substantially orthogonal to the surface of the moving storage medium, and in a tracking direction substantially orthogonal to the focus direction and to the direction of the information tracks.

A lens drive device for a pickup, referred to as a suspension unit, and a method for manufacturing the same is described in US Patent Application Publication US 2001/0017490 A1. The suspension unit comprises a lens holder, a suspension wire holder of a carrier, referred to as a suspension base, and suspension wires, referred to as wire-form elastic members made of a metal. The lens holder and the suspension base are integrally moulded out of resin on the two end sides of the wire-form elastic members. A method for manufacturing needs a step of positioning the wire-form elastic members with additional facilities before moulding the lens holder and the suspension base. A pickup with an actuator manufactured in this way has a certain height.

### SUMMARY OF THE INVENTION

It is therefore desirable to improve an actuator, namely for a pickup, according to the preamble of claim 1, a board used for and a method for manufacturing the actuator, where the overall size of the actuator, in particular its height, is decreased.

According to the invention this is achieved by the features of Claims 1, 3 and 6. Possible advantageous developments of the invention are specified in the dependent claims.

An actuator for a pickup for accessing moving storage media carrying substantially parallel information tracks has a suspension wire holder, a lens holder with a lens, and suspension wires connecting the suspension wire holder and the lens holder. Relative to the suspension wire holder, the lens holder is movable in at least the tracking direction and the focus direction. The suspension wires extend in an information direction orthogonal to the tracking direction as well as to the focus direction, which also is the direction of the tangent to the information track at the target spot.

According to the invention, the suspension wire holder and the lens holder are constituted by a suspension wire holder part and a lens holder part of a single actuator blank made from an insulating material. The suspension wire holder and the lens holder are coplanar, parallel to the moving storage medium being accessed. They both extend in the same plane spanned by the tracking direction and the information direction, and notably are arranged relative to each other the same way as they were while being still connected parts of the actuator blank.

This enables that the actuator according to the invention constitutes a very flat construction, which miniaturises the pickup with the actuator and which is advantageously used for mobile applications.

As mentioned, it is an aspect of the invention, that the arrangement, relative to each other, of the suspension wire holder and the lens holder is the same when they are part of the finished actuator than while they are still connected parts of the actuator blank when the actuator is being manufactured. Therefore the invention enables that the suspension wire holder part and the lens holder part advantageously are being provided with their facilities while still connected with the actuator blank. This allows that the assembly of the actuator is automated, which results in an easy and reproducible assembly.

Advantageously, a board from which the suspension wire holder and the lens holder are manufactured, comprises one or preferably more actuator blanks and is made of a printed circuit board material. This enables that the suspension wire holder and the lens holder, in addition to their mechanical function, carry electrical leads, and thus also serve as electrical contact means for the suspension wires and for coils. Separate electrical connection means can thus be avoided, and the number of components of the actuator is decreased.

Advantageously, even when not used as electrical contact means, or in addition to metal layers serving as electrical leads, metal layers can be foreseen on outer or inner surfaces of the suspension wire holder and the lens holder, to mechanically stabilize them.

According to the invention, a board for manufacturing an actuator according to the invention is made from an insulating material and is machined as to comprise at least one actuator blank, preferably numerous actuator blanks. Each actuator blank of the board, being a piece of a flat insulating board, comprises a frame, a suspension wire holder part connected to the frame, and a lens holder part also connected to the frame. Preferably, the frame is provided with pairs of notches at its outer circumference, arranged such that, when suspension wires are arranged to connect the notches without play, they are positioned ready to be electrically connected to contact areas on the suspension wire holder part and on the lens holder part.

According to the invention, a method for manufacturing an actuator from an actuator blank made of insulating material, comprising a frame and a suspension wire holder part connected to the frame and a lens holder part connected to the frame and comprising electrical contact areas, comprises the steps of:
- electrically connecting suspension wires to the contact areas on the suspension wire holder part and on the lens holder part, and afterwards
- separating, as a whole, the ensemble consisting of the suspension wire holder part, the lens holder part, and the suspension wires connecting them, from the frame;
   and a step of mounting the suspension wire holder part to a base.

As a first of two alternatives, the suspension wire holder part is mounted to the base after the step of separating. This has the advantage, that the step of separating is not being hindered by accessibility restrictions which the presence of the base might otherwise impose.

As the second of the two alternatives, the suspension wire holder part is mounted to the base before the step of separating, i.e. while the suspension wire holder part and the lens holder part are still connected with the frame. This has the advantage of avoiding as much as possible the necessity to manipulate the lens holder when it is supported by the suspension wires only.

Preferably, the frame of the actuator blank comprises pairs of notches, and the step of electrically connecting comprises fixing the suspension wires in their positions by the notches.

The method for manufacturing an actuator may comprise a step of mounting a lens on the lens holder part. This step can be performed before, during or after the above mentioned method steps.

That an actuator has been manufactured according to the method of this invention, implies several positive and negative structural properties of the actuator: The lens holder and the suspension wire holder, i.e. the parts of the actuator blank that remain in the finished actuator, are made from the same material. If the material is inhomogeneous in any way, the inhomogenity will show in both parts in logical continuation. For example, if the material has different top and bottom surfaces, both parts will have identical top/bottom surfaces, respectively. Or, if the material comprises an internal fortification structure like embedded glass fibre weave or the like, such structure will logically continue from one part into the other. The edge of both parts will comprise at least one section each, which has a surface quality as it is typical for the method used for separating, e.g. punching. It is likely, that such sections showing traces of having been separated will exist at two opposite ends of the parts. Also, assuming that both parts have been separated from the frame in a single punching step, they will exhibit punching marks or traces oriented in the same direction - bottom up or top down. The negative structural properties are absence of other fixating means like fine-tooled edges or holes to receive fixating pins or the like.

The above described actuator as a whole is movable and is being movedin a direction parallel to the surface and orthogonal to the information tracks on the storage medium, so that all storage locations on the medium can be accessed,. In this, accessing shall be understood to encompass reading access for reading information from the storage medium, writing access for writing or recording information onto the storage medium, or combinations of reading and writing access.

One possible form of moving storage media is disks carrying concentric circular or spiral information tracks, with the access principle being of a reflective type where an access light beam is generated and focused onto the information track, and a reflected light beam coming back from and being modulated by the information track is being focused onto a photo detector arrangement and evaluated. However, it is also within the scope of this invention to be used together with other forms of optical recording medium having information tracks in layers, such as those in card or tape form; and regardless whether the access principle is of a reflective or transductive type.

### BRIEF DESCRIPTION OF THE DRAWINGS

The invention will be explained in more detail using two embodiments, illustrated in Figures 1 to 8.

In the figures:
- Figure 1: shows a simplified perspective view of an actuator blank of the first embodiment of the invention;
- Figure 2: shows a simplified perspective view of the actuator blank of Figure 1 provided with suspension wires et al.;
- Figure 3: shows a simplified perspective view of an ensemble of the first embodiment of the invention;
- Figure 4: shows another simplified perspective view of the ensemble of Figure 3;
- Figure 5: shows a simplified perspective view of the ensemble of Figure 3 provided with a base, i.e. of an actuator;
- Figure 6: shows another simplified perspective view of the actuator of Figure 5;
- Figure 7: shows a simplified perspective view of an ensemble of the second embodiment of the invention;
- Figure 8: shows another simplified perspective view of the ensemble of Figure 7.

### DETAILED DESCRIPTION OF THE INVENTION

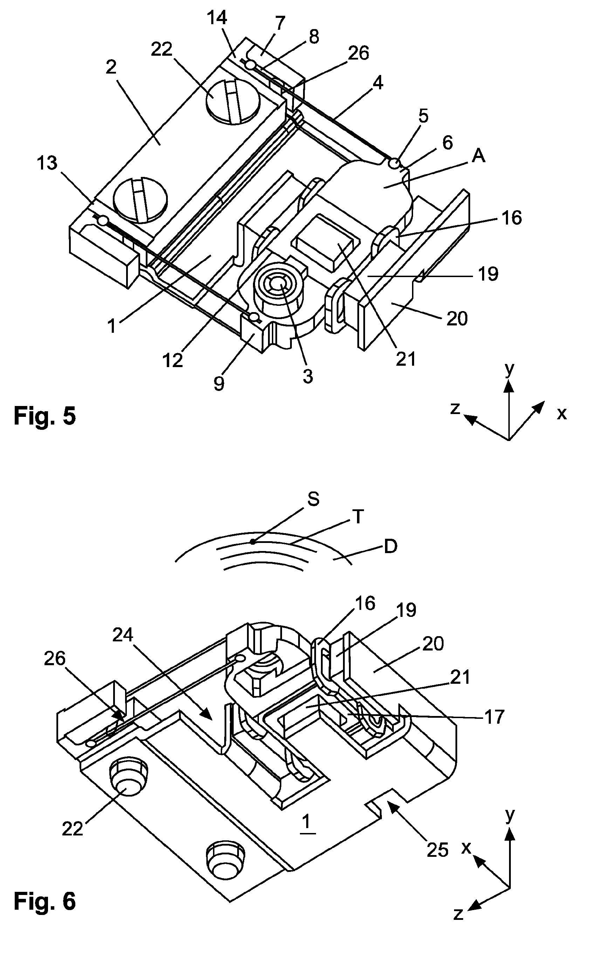

An actuator for accessing moving storage media, namely a disk D, of the first embodiment of the invention is shown in **Figures 5 and 6**. The actuator has a carrier with a base 1 and a suspension wire holder 2, a lens holder A with a lens 3, and suspension wires 4 connecting the suspension wire holder 2 and the lens holder A. The actuator has four suspension wires 4 extending from the suspension wire holder 2 to the lens holder A, i.e. from the rear to the front of the actuator.

By means of the suspension with the suspension wires 4, the lens holder A with the lens 3 is able to perform focus motion in a focus direction Y orthogonal to the surface of the disk D carrying substantially circular information tracks T, shown in the figure 6 at very enlarged, disproportionate distance. Additionally, the lens holder A is able to perform tracking motion in a tracking direction X parallel to the surface of the disk D and orthogonal to the information tracks T.

According to the invention, the suspension wire holder 2 and the lens holder A are constituted by a suspension wire holder part 2' and a lens holder part A', namely by parts of one machined board, which is used for manufacturing the actuator. The board is made from a printed circuit board material. In particular, the material of the board is a core material of a printed circuit board without metal layers.

The suspension wire holder 2 and the lens holder A have a shape of longish bars which extend, parallel to each other, in the tracking direction X, and which are arranged with a certain distance to one another in the information direction Z.

The four suspension wires 4, which are made from a metal, extend in the information direction Z from the suspension wire holder 2 to the lens holder A and connect the suspension wire holder 2 and the lens holder A. The suspension wires 4 are arranged substantially parallel. They are oriented in the information direction Z and arranged symmetrically with respect to the suspension wire holder 2 and the lens holder A. Two suspension wires 4 end at each of two opposite sides of the lens holder A in the tracking direction X. The two suspension wires 4 are arranged on top of each other in the focus direction Y, at each side the lens holder A. In particular, one of these two suspension wires 4 ends on the top side of the lens holder A and the other suspension wire 4 ends on the bottom side of the lens holder A. The suspension wires 4 are soldered with their one ends to the lens holder A by soldering points 5 on soldering pads 6. The connections of the suspension wires 4 to the suspension wire holder 2 are similar to the connections to the lens holder A, where the suspension wires 4 are soldered with their other ends to the suspension wire holder 2 by soldering points 7 on soldering pads 8. The soldering pads 6 and 8 are made from a metal.

The lens holder A is rounded at its edges with projections 9 in the vicinity of the soldering points 5, at opposite sides in the tracking direction X. The lens holder A is provided with a central opening 10 and a lens opening 11, at one side in tracking direction X, near the central opening 10. The lens holder A and the suspension wire holder 2 are provided with first grooves 12 and second grooves 13 extending in information direction Z. The first grooves 12 are arranged near the central opening 10 of the lens holder A at opposite side in the tracking direction X. The second grooves 13 are arranged in a region of the ends of the suspension wire holder 2 in tracking direction X, inside of positions of the suspension wires 4. The suspension wire holder 2 is provided with projections 14 extending from the top side and from the bottom side of the suspension wire holder 2 in the focus direction Y, at the positions of the suspension wires 4.

The lens 3 is added to the lens holder A. The lens 3 is arranged in the lens opening 11 at the top side of the lens holder A. The lens opening 11 is broadened, at the bottom side of the lens holder A. The lens holder part A is provided with a balance opening 15 corresponding to the bottom section of the lens opening 11, which is located at the bottom side of the lens holder part A, at the other side in tracking direction X, near the central opening 10, in order to compensate any imbalance due to the asymmetrical arrangement of the lens 3.

The lens holder A is provided with four tracking coils 16 extending in a plane spanned by the tracking direction X and the focus direction Y. Two tracking coils 16 are attached at a front side of the lens holder A and two tracking coils 16 at its rear side, in the information direction Z.

The lens holder A is provided with a focus coil 17 extending in a plane spanned by the tracking direction X and the information direction Z. The lens holder A has a coil opening 18 around the central opening 10 at the bottom side of the lens holder A, in order to constitute a room for the focus coil 17. The focus coil 17 is arranged in the coil opening 18 around the central opening 10.

The base 1, which is made from a metal, extends substantially in a plane spanned by the tracking direction X and the information direction Z, i.e. in a plane orthogonal to the focus direction Y and parallel to the surface of the disk D. The base 1 carries a magnet configuration of the actuator with two multipolar magnets 19, two outer yokes 20 and an inner yoke 21. The outer yokes 20, each carrying one of the multipolar magnets 19, extend vertically from the base 1, namely in the focus direction Y, and are arranged in a way that each of the multipolar magnets 19 faces a pair of tracking coils 16, at one of two opposite sides of the lens holder A in the information direction Z. The inner yoke 21 extends vertically from the base 1, namely in the focus direction Y, through the central opening 10 of the lens holder A.

The base 1 is connected to the suspension wire holder 2 by two screws 22 extending through screw openings 23 in the suspension wire holder part 2. The base 1 is provided with weight reducing recesses 24, in a region under the lens 3, in order to reduce the weight of the actuator and with mobility clearances recesses 25, e.g. under the projections 9 for the soldering points 5, in order to assure the movements of the lens holder A.

The suspension wire holder 2 comprises damping recesses 26, at opposite sides in the tracking direction X. The damping recesses 26 are filled with a damping material, which fills the damping recesses 26 in order to damp the suspension wires 4 and which is not shown in the figures.

As an alternative for the balance opening 15 or as an additional feature, at least one of the suspension wires 4 at the opposite side of the lens 3 has a diameter larger than the diameter of the other suspension wires 4.

A pickup with an actuator according to this invention can be used in the so-called slide or sled design of optical media drives, where it is shiftably fitted to a frame structure of the drive, with appropriate linear driving means for realising the shift, such as linear motors or a motor driven threaded rod. Alternatively, the actuator according to this invention is also usable in the so-called swing arm design, where it is pivotably integrated at the end of such an arm having a pivoting axis parallel to the focus direction. In that way, the actuator is movable across the tracks T on the surface of the disk D along an arc which has its main extension in the tracking direction X.

As an alternative of the invention, the material of the board is a core material of a printed circuit board without metal layers. The use of this material for the board decreases the material costs.

As another alternative of the invention, the material of the board is a material of a printed circuit board with at least one metal layer inside. One or more metal layers stabilise the actuator, namely the suspension wire holder 2 and the lens holder A.

According to the invention, the board used for manufacturing the actuator, is machined in a way that the board comprises at least one actuator blank B, e.g. numerous actuator blanks B, extending in a plane spanned by the tracking direction X and the information direction Z.

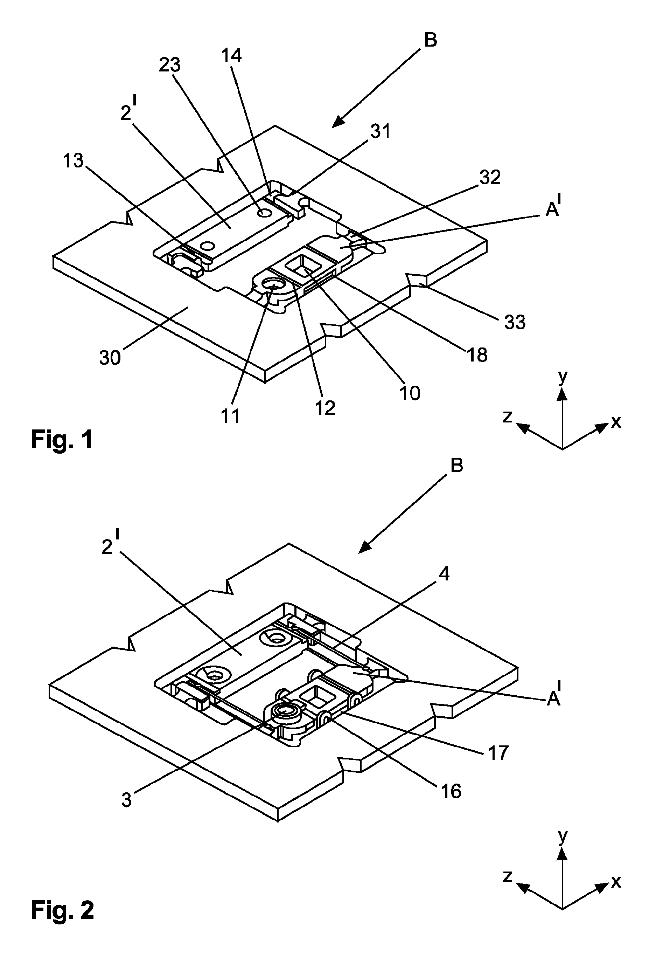

**Figures 1 and 2** show perspective views from above and below of one actuator blank B according to the invention. Each actuator blank B has a frame 30, a suspension wire holder part 2' and a lens holder part A', where the suspension wire holder part 2' and the lens holder part A' consist of two inner longish bars. The suspension wire holder part 2' and the lens holder part A' comprise catwalks 31, 32 at their ends, and are connected to the frame 30 by the catwalks 31, 32. They are arranged at a distance from each other in the information direction Z and extend, parallel to each other, in the tracking direction X. The distance nearly corresponds to the similar widths of the suspension wire holder part 2' and the lens holder part A'. This is shown in the figures. Each frame 30 is provided with notches 33 in line with the positions of suspension wires 4 for fixing the suspension wires 4 to be soldered to the suspension wire holder part 2' and to the lens holder part A', in their positions.

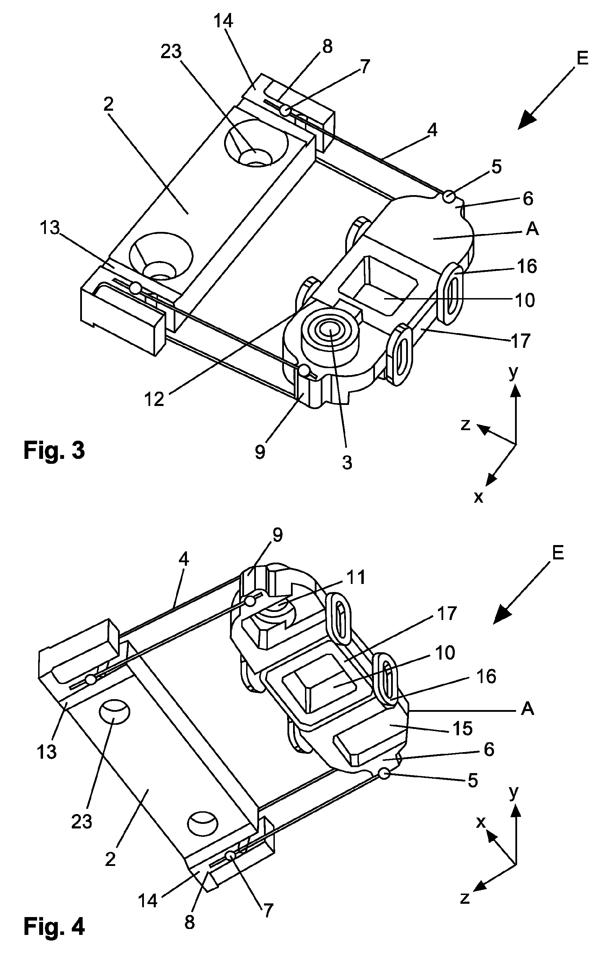

**Figures 3 and 4** show perspective views from above and below of an ensemble E of the first embodiment, namely where the suspension wire holder 2 and the lens holder A are already connected by the suspension wires 4 and have been separated from the frame 30, but the suspension wire holder 2 has not yet been mounted to a base.

In an embodiment of the method for manufacturing the actuator according to the invention, the board made from insulating material and comprising contact areas, is machined with the steps:
a) removing material parts from at least one actuator blank B of the board to constitute the frame 30, the suspension wire holder part 2' connected to the frame 30 and the lens holder part A' connected to the frame 30,
b) providing the lens holder part A' with coils,
c) soldering the suspension wires 4 to the suspension wire holder part 2' and to the lens holder part A',
d) adding the lens 3 to the lens holder part A', and
f) separating from the frame 30, as a whole, in a single punching step, the suspension wire holder part 2' and the lens holder part A' connected as they are by the suspension wires 4.
   Additionally, the base 1 is added.

In particular, the material of the board is a core material of a printed circuit board without metal layers, as mentioned above. In step a) material parts from each actuator blank B are removed in a way that the actuator blank B is constituted with the frame 30, the suspension wire holder part 2' and the lens holder part A', also as mentioned above. The suspension wire holder part 2' and the lens holder part A' are constituted as longish bars and are provided with the catwalks 31, 32, with the central opening 10, the lens opening 11, the first grooves 12, the second grooves 13, the projections 14, the opening 15, the coil opening 18 and the screw openings 23. The frame 30 is provided with the notches 33.

The board comprises predefined and processed contact areas on the suspension wire holder part 2' and on the lens holder part A'. In particular, the contact areas are constituted as the soldering pads 6 and 8, which are already added to the board before the suspension wire holder part 2' and the lens holder part A' are constituted.

In step b) the lens holder part A' is provided with the four tracking coils 16, two tracking coils 16 each being attached at the front side and at the rear side of the lens holder part A' in the information direction Z. In addition, in step b) the lens holder part A' is provided with the focus coil 17, which is attached in the coil opening 18. In step c) the positions of the suspension wires 4 are fixed by the notches 33 of the frame 30 and the suspension wires 4 are soldered on the soldering pads 8 of the suspension wire holder part 2' constituting the soldering points 7 and on the soldering pads 6 of the lens holder part A' constituting the soldering points 5. The unnecessary sections of the suspension wires 4 are cut off. In addition, the tracking coils 16 and the focus coil 17 are electrically connected to the suspension wires 4, e.g. by being connected to the soldering pads 6. In step d) the lens 3 is added, where the lens 3 is attached to the lens opening 11 of the lens holder part A'.

In the following step f), the suspension wire holder part 2' and the lens holder part A' connected by the suspension wires 4 are cut off and taken off as a whole from the frame 30. The cut off suspension wire holder 2 and the cut off lens holder A, which are connected by the suspension wires 4, constitute the ensemble E, as shown in the figures 3 and 4. The projections 9 are constituted as sections of the catwalks 32.

In another following step g), the base 1 is added to this ensemble E taken off from the frame 30. In particular, the base 1 is mounted to the suspension wire holder 2, where the two screws 22 extending through the screw openings 23 of the suspension wire holder 2 are fixed to the base 1.

As an alternative of the method, the steps machining the board comprise an additional step:
e) adding the base 1 to the suspension wire holder part 2' and the lens holder part A', both being connected to the frame 30, before step f).

In particular, the base 1 is mounted to the suspension wire holder part 2'.
As an alternative for providing the contact areas, the material of the board is a material of a printed circuit board with two metal layers covering the top side and the bottom side of the board for constituting the contact areas. In step a) the contact areas are restricted to the soldering pads 6 and 8 on the suspension wire holder part 2' and on the lens holder part A' by removing the metal around the soldering pads 6 and 8.

As a further alternative of the invention, the material of the board is a material of a printed circuit board with at least one metal layer inside. One or more metal layers inside enable an improvement of the mechanical stability.

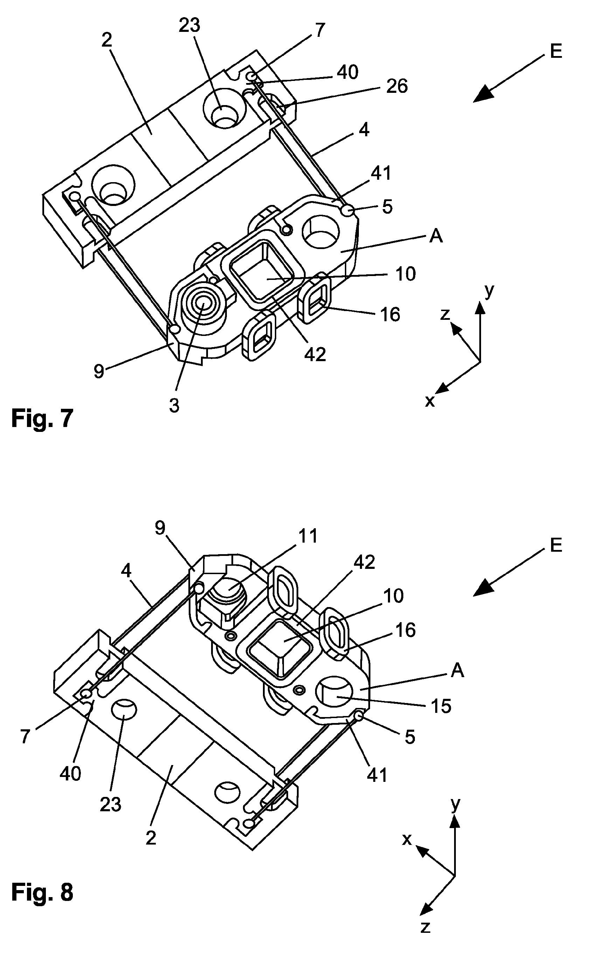

An ensemble E of an actuator of a second embodiment of the invention is shown in **Figures 7 and 8****.** The ensemble E and the actuator constituted by the ensemble E with the base 1 correspond to the first embodiment except for the following features:
The suspension wire holder 2 and the lens holder A are provided with soldering pads 40, 41, which are somewhat differently shaped than the soldering pads 6 and 8 of the first embodiment. The suspension wire holder 2 is not provided with the grooves 13 and the lens holder A is not provided with the grooves 12 and with the coil opening 18.

The material of the board is a material of a printed circuit board with several layers constituting a fine pattern focus coil 42 in the lens holder part A' and in the lens holder A respectively. In Figure 7 a first layer of the fine pattern coil 42 at the top of the lens holder A and in Figure 8 a last layer of the fine pattern coil 42 at the bottom of the lens holder A is seen. In step b) the lens holder part A' is only provided with the four tracking coils 16.

As an alternative, the material of the board is a material of a printed circuit board with several layers of a printed focus coil in the lens holder part A' and in the lens holder A respectively.

## Claims

1. An actuator for accessing moving storage media (D) carrying substantially parallel information tracks (T), the actuator having a suspension wire holder (2), a lens holder (A) with a lens (3), and suspension wires (4) movably connecting the suspension wire holder (2) and the lens holder (A), the actuator **characterised in that** the suspension wire holder (2) and the lens holder (A) are constituted by a suspension wire holder part (2') and a lens holder part (A') of a single actuator blank (B) made from a flat board of insulating material, and **in that** the suspension wire holder (2) and the lens holder (A) are coplanarly arranged relative to each other the same way as they were while being still connected parts (2', A') of the actuator blank (B).

2. An actuator according to Claim 1, wherein the board is made of printed circuit board material.

3. A board used for manufacturing an actuator according to one of Claims 1 to 2, the board comprising at least one actuator blank (B) having a frame (30), a suspension wire holder part (2') connected to the frame (30), and a lens holder part (A') connected to the frame (30), where the suspension wire holder part (2') and the lens holder part (A') are arranged relative to each other the same way as they are in the actuator manufactured from the board (B).

4. A board according to Claim 3, where the frame (30) is provided with notches (33) arranged such that, when suspension wires (4) are arranged to connect the notches (33) without play, the suspension wires (4) are positioned ready to be electrically connected to contact areas (6, 8) on the suspension wire holder part (2') and on the lens holder part (A').

5. A board according to Claim 3 or 4, being made of a printed circuit board material comprising at least one metal layer.

6. A method for manufacturing an actuator according to Claim 1 or Claim 2 from an actuator blank (B) made of insulating material comprising a frame (30) and a suspension wire holder part (2') connected to the frame (30) and a lens holder part (A') connected to the frame (30) and comprising electrical contact areas (6, 8), the method comprising the steps of:
- electrically connecting suspension wires (4) to the contact areas (6, 8) on the suspension wire holder part (2') and on the lens holder part (A'), and afterwards
- separating, as a whole, the ensemble consisting of the suspension wire holder part (2'), the lens holder part (A'), and the suspension wires (4) connecting them, from the frame (30);
and a step of mounting the suspension wire holder part (2') to a base (1).

7. A method according to Claim 6, wherein the step of mounting is performed after the step of separating.

8. A method according to Claim 6, wherein the step of mounting is performed before the step of separating.

9. A method according to one of Claims 6 to 8, where the frame (30) of the actuator blank (B) comprises pairs of notches (33), and the step of electrically connecting comprises fixing the suspension wires (4) in their positions by the notches (33).
